# EUROPÄISCHE PATENTSCHRIFT

(11) **EP 3 181 381 B1**
(45) Veröffentlichungstag und Bekanntmachung des Hinweises auf die Patenterteilung: **12.02.2020**
(21) Anmeldenummer: 16188865.6
(22) Anmeldetag: 15.09.2016
(51) Int. Cl.: B60C 19/08

(54) **FAHRZEUGLUFTREIFEN**
PNEUMATIC VEHICLE TYRES
PNEUMATIQUES DE VÉHICULE

(30) Priorität: 14.12.2015 DE 102015225150
(43) Veröffentlichungstag der Anmeldung: 21.06.2017
(73) Patentinhaber: Continental Reifen Deutschland GmbH, 30165 Hannover (DE)
(72) Erfinder: Weber, Christian, 30826 Garbsen (DE); Kendziorra, Norbert, 30827 Garbsen (DE)
(74) Vertreter: Finger, Karsten

(56) Entgegenhaltungen:
- EP-A1- 2 615 131
- EP-A1- 2 738 022
- EP-A1- 2 939 855

## Beschreibung

Die Erfindung betrifft einen Fahrzeugluftreifen in Radialbauart mit einer Innenschicht, Seitenwänden, Wulstkernen, einer um die Wulstkerne umgeschlagenen mit der Laufstreifenaußenfläche in elektrisch leitfähiger Verbindung stehenden zumindest abschnittsweise elektrisch leitfähigen Karkasseinlage und elektrisch nicht leitfähigen Hornprofilen, wobei in zumindest einem Wulstbereich mit dem Hornprofil in Kontakt stehendes elektrisch leitfähiges Material die Karkasseinlage mit der Felge elektrisch leitend verbindet.

Ein Reifen der eingangs genannten Art ist beispielsweise aus der DE 10 2013 107 385 A1 bekannt. Der Fahrzeugluftreifen weist in jedem seiner Wulstbereiche ein elektrisch nicht leitfähiges Hornprofil und zumindest einen das Hornprofil durchquerenden elektrisch leitfähigen Gummistreifen auf, welcher die elektrisch leitfähige Karkasseinlage und bei auf der Felge montiertem Reifen die Felge kontaktiert. Es kann ein einziger in Umfangsrichtung umlaufender Gummistreifen oder es können mehrere über den Reifenumfang verteilte Gummistreifen vorgesehen sein. Alternativ kann auch ein die Wulstzehe umfassender Hornprofilteil elektrisch leitfähig ausgeführt sein. Ein weiterer Fahrzeugluftreifen mit einem ein elektrisch nicht leitfähiges Hornprofil durchquerenden elektrisch leitfähigen Gummistreifen ist aus der WO 2015/012173 bekannt.

Der aus der EP 2 233 323 A1 bekannte Fahrzeugluftreifen weist in seinen Wulstbereichen einen reifenaußenseitig angeordneten elektrisch nicht leitfähigen Felgengummi sowie ein zwischen dem Felgengummi und einer elektrisch leitfähigen Karkasseinlage verlaufendes elektrisch leitfähiges Wulstband auf, welches die Felge bei montiertem Reifen kontaktiert.

Aus der EP 2 500 188 B1 ist ein Fahrzeugluftreifen mit einem einen elektrisch leitfähigen Hornprofilteil und einen elektrisch nicht leitfähigen Hornprofilteil aufweisenden Hornprofil bekannt. Der elektrisch leitfähige Hornprofilteil steht bei montiertem Reifen mit der Felge sowie mit einem über den Seitenwandbereich zur Laufstreifenaußenfläche verlaufenden elektrisch leitfähigen Gummistreifen in Kontakt. Ein weiterer einen derartigen im Seitenwandbereich verlaufenden Gummistreifen aufweisender Fahrzeugluftreifen ist aus der EP 2 799 247 A2 bekannt.

Es ist bekannt, Reifenbauteile, insbesondere den Laufstreifen und die Seitenwände, aus mit Silica (Kieselsäure) gefüllten Kautschukmischungen zu fertigen um den Rollwiderstand zu reduzieren. Silica enthaltende Kautschukmischungen verleihen den daraus gefertigten Gummibauteilen jedoch einen derart hohen elektrischen Widerstand, dass diese elektrisch nicht mehr leitfähig sind, sodass entsprechende Maßnahmen zur Ableitung der beim Fahren auftretenden elektrostatischen Aufladungen getroffen werden müssen. Die elektrische Leitfähigkeit ist auch bei Reifenbauteilen zu gering, welche aus einer eine sehr geringe Menge an Ruß oder aus einer Ruß mit einer kleinen BET-Oberfläche enthaltenden Kautschukmischung gefertigt sind. Bevorzugter Weise ist daher auch das Hornprofil aus einem derartigen Gummimaterial gefertigt.

Der Erfindung liegt die Aufgabe zugrunde, bei einem Reifen der eingangs genannten Art in den Wulstbereichen auf sehr einfache und einfach zu fertigende Weise elektrisch leitfähige Verbindung zur Felge sicherzustellen.

Die gestellte Aufgabe wird erfindungsgemäß dadurch gelöst, dass das elektrisch leitfähige Material an der Außenseite des Hornprofiles verläuft und reifeninnenseitig und/oder reifenaußenseitig zumindest einen Abschnitt aufweist, welcher in radialer Richtung über das Hornprofil hinausverläuft und die Karkasseinlage kontaktiert.

Bei erfindungsgemäßen Fahrzeugluftreifen ist es daher möglich, die Hornprofile einteilig aus einer elektrisch nicht leitfähigen Kautschukmischung zu extrudieren, da das die Ableitung zwischen der Felge und der Karkasseinlage sicherstellende elektrisch leitfähige Material auf einfache Weise an der Außenseite des Hornprofils aufgebracht wird.

Bei einer bevorzugten Ausführungsvariante kontaktiert der Abschnitt des elektrisch leitfähigen Materiales die Karkasseinlage reifeninnenseitig. Bei dieser Ausführungsvariante ist es von Vorteil, wenn der Abschnitt des elektrisch leitfähigen Materiales in radialer Richtung in einer Höhe von 10,0 mm bis 50,0 mm, insbesondere von 15,0 mm bis 30,0 mm, endet, wobei die Höhe ausgehend von einer in axialer Richtung verlaufenden Linie ermittelt wird, welche die Felge dort schneidet, wo sich das innere Ende des Felgenradius befindet. Dementsprechend endet das elektrisch leitfähige Material im Bereich reifeninnenseitig neben dem Wulstkern, wobei es in diesem Bereich auf besonders einfach aufgebracht werden kann.

Bei einer alternativen bevorzugten Ausführungsvariante kontaktiert der Abschnitt des elektrisch leitfähigen Materiales die Karkasseinlage reifenaußenseitig. Bevorzugter Weise endet der Abschnitt des elektrisch leitfähigen Materiales in radialer Richtung in einer Höhe von 30,0 mm bis 90,0 mm, insbesondere von bis zu 70,0 mm, wobei die Höhe ausgehend von einer in axialer Richtung verlaufenden Linie ermittelt wird, welche die Felge dort schneidet, wo sich das innere Ende des Felgenradius befindet.

Bei einer bevorzugten Ausführungsvariante ist das elektrisch leitfähige Material ein Gummistreifen, welcher sich vorteilhafterweise auf besonders haltbare Weise mit dem angrenzenden, ebenfalls aus einer Kautschukmischung gefertigtem Hornprofil verbinden lässt.

Der Gummistreifen weist vorzugsweise eine Dicke von 0,5 mm bis 1,0 mm auf. Derartige Gummistreifen haben keinen Einfluss auf die Uniformity des Reifens.

Um eine besonders zuverlässige Ableitung elektrostatischer Aufladungen zu ermöglichen weist der Gummistreifen in Umfangsrichtung eine Breite von 2,0 mm bis 80,0 mm, insbesondere von 5,0 mm bis 50,0 mm, auf. Alternativ läuft der Gummistreifen in Umfangsrichtung des Reifens um.

Bei einer bevorzugten Ausführungsvariante ist das elektrisch leitfähige Material zumindest ein elektrisch leitfähiger Faden oder ein elektrisch leitfähiges Gewebe. Fäden und Gewebe können ebenfalls besonders einfach bei der Reifenfertigung im Reifen eingebaut werden.

Bei weiteren bevorzugten Ausführungsvarianten ist das elektrisch leitfähige Material eine aufgesprühte oder aufgestrichene elektrisch leitfähige Paste, eine elektrisch leitfähige Sprühlösung oder eine elektrisch leitfähige Suspension.

Bei noch weiteren bevorzugten Ausführungsvarianten ist das elektrisch leitfähige Material ein elektrisch leitfähiges Pulver oder ein elektrisch leitfähiges Granulat.

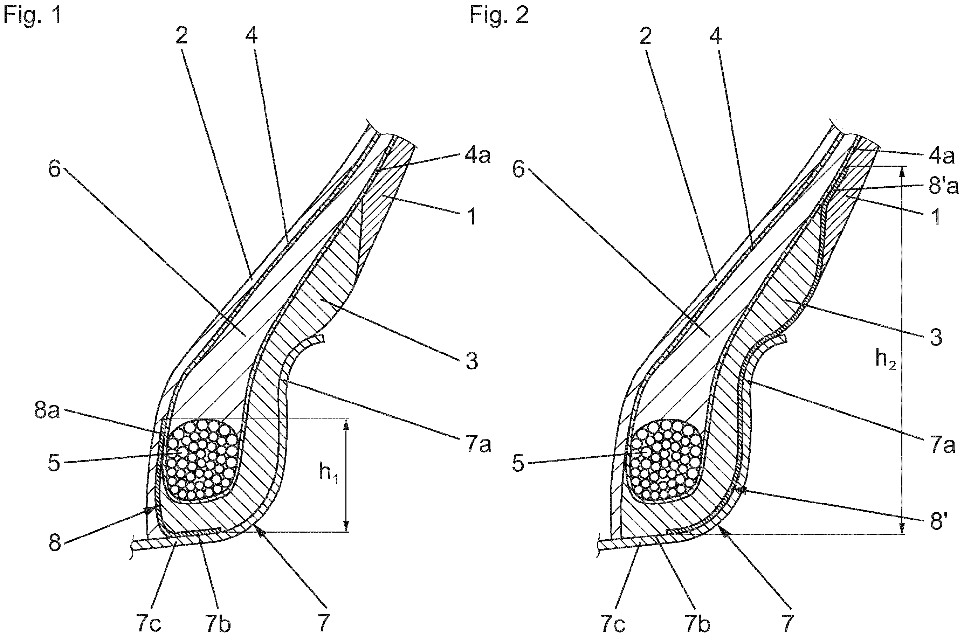

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 und Fig. 2 Querschnitte durch Wulstbereiche eines Fahrzeugluftreifens mit je einer Ausführungsvariante der Erfindung.

Erfindungsgemäß ausgeführte Fahrzeugluftreifen können Reifen für PKW, Vans, Light-Trucks oder Nutzfahrzeuge sein. Die nachfolgend angegebenen Höhen hᵢ werden in radialer Richtung ausgehend von einer in axialer Richtung verlaufenden Linie ermittelt, welche die Felge dort schneidet, wo sich das innere Ende des Felgenradius befindet.

In Fig. 1 und Fig. 2 sind von den wesentlichen Bauteilen eines für einen PKW vorgesehenen Fahrzeugluftreifens in Radialbauart jeweils ein radial innerer Endabschnitt einer Seitenwand 1 und einer Innenschicht 2, ein Hornprofil 3, ein im Wulstbereich befindlicher Abschnitt einer Karkasseinlage 4 mit Karkasshochschlag 4a, ein Wulstkern 5 sowie ein auf dem Wulstkern 5 sitzender Apex 6 dargestellt. In den Figuren ist ferner jener Teil einer Felge 7 gezeigt, welcher bei montiertem Reifen den Wulstbereich des Reifens kontaktiert, sodass ein Felgenhorn 7a und ein die Wulstsitzfläche 7b aufweisender Felgenabschnitt 7c gezeigt ist. Zu den nicht dargestellten und vorzugsweise auf bekannte Weise ausgeführten Reifenbauteilen gehören ein profilierter Laufstreifen und ein mehrlagiger Gürtelverband.

Der aus Stahlseilen bestehende Wulstkern 5, der Apex 6, die das Hornprofil 3 reifenaußenseitig überlappende Seitenwand 1 und die Innenschicht 2 können in an sich bekannter Weise ausgeführt sein.

Die Karkasseinlage 4 besteht aus in vorzugsweise elektrisch nicht leitfähigem Gummimaterial eingebetteten in an sich bekannter Weise verlaufenden insbesondere textilen Festigkeitsträgern, wobei das Gummimaterial vorzugsweise aus einer einen derartigen Anteil an Silica (fein verteilter Kieselsäure) enthaltenden Kautschukmischung gefertigt ist, dass es elektrisch nicht leitfähig ist. Unter einem elektrisch nicht leitfähigen Gummimaterial wird ein solches verstanden, das einen spezifischen elektrischen Widerstand > 1 x 10⁸ Ohm^{∗}cm aufweist. Die Karkasseinlage 4 ist vorzugsweise auf ihrer Oberfläche bzw. auf entsprechenden Teilbereichen ihrer Oberfläche mit elektrisch leitfähigem Material, insbesondere mit elektrisch leitfähigen Fäden, versehen, sodass zwischen ihr und der Laufstreifenaußenfläche in an sich bekannter Weise eine elektrisch leitfähige Verbindung sichergestellt ist. Alternativ kann das Gummimaterial der Karkasseinlage 4 elektrisch leitfähig sein.

Das Hornprofil 3 verläuft axial außerhalb der Karkasseinlage 4 und ist aus elektrisch nicht leitfähigem Gummimaterial gefertigt. In zumindest einem der Wulstbereiche ist mit der Karkasseinlage 4 in Verbindung stehendes elektrisch leitfähiges Material angeordnet, welches bei montiertem Reifen auch die Felge 7 kontaktiert.

Bei der in Fig. 1 gezeigten Ausführungsvariante ist das die Felge 7 kontaktierende elektrisch leitfähige Material ein an der Außenseite des Hornprofiles 3 verlaufender elektrisch leitfähiger Gummistreifen 8. Der Gummistreifen 8 verläuft entlang der Wulstsitzfläche 7b und ausgehend von dieser reifeninnenseitig in radialer Richtung zunächst zwischen dem Hornprofil 3 und der Innenschicht 2 sowie anschließend mit einem Abschnitt 8a weiter zwischen dem Hornprofil 3 und der Karkasseinlage 4. In radialer Richtung endet der Abschnitt 8a in Kontakt mit der Karkasseinlage 4 in einer Höhe hᵢ von 10,0 mm bis 50,0 mm, insbesondere von 15,0 mm bis 30,0 mm.

Bei der in Fig. 2 gezeigten Ausführungsvariante ist ein die Felge 7 kontaktierender an der Außenseite des Hornprofiles 3 verlaufender elektrisch leitfähiger Gummistreifen 8' vorgesehen. Der Gummistreifen 8' verläuft ausgehend vom Kontaktbereich zur Wulstsitzfläche 7b reifenaußenseitig in radialer Richtung zunächst das Hornprofil 3 entlang, dabei in den Bereich zwischen dem Hornprofil 3 und der Seitenwand 1 und nachfolgend mit einem Abschnitt 8'a ein Stück zwischen der Seitenwand 1 und dem Karkasshochschlag 4a. In radialer Richtung endet der Abschnitt 8'a in Kontakt mit dem Karkasshochschlag 4a in einer Höhe h₂ von 30,0 mm bis 90,0 mm, insbesondere von bis zu 70,0 mm.

Die Dicke der Gummistreifen 8, 8' beträgt jeweils 0,5 mm bis 1,0 mm, ihre in Umfangsrichtung ermittelte Breite beträgt jeweils 2,0 mm bis 80,0 mm, insbesondere jeweils 5,0 mm bis 50,0 mm. Die Gummistreifen 8, 8' können auch als in Umfangsrichtung umlaufende Gummistreifen ausgeführt sein.

Bei einer weiteren Ausführungsvariante ist ein im Querschnitt die gesamte Außenkontur des Hornprofiles 3 entlangverlaufender elektrisch leitfähiger Gummistreifen vorgesehen, welcher sowohl reifeninnenseitig als auch reifenaußenseitig einen in Kontakt mit der Karkasseinlage 4 endenden Abschnitt aufweist.

Anstelle des Gummistreifens 8, 8' können auch elektrisch leitfähige Fäden, ein elektrisch leitfähiges Gewebe, aufgesprühte oder aufgestrichene elektrisch leitfähige Pasten, Sprühlösungen oder Suspensionen sowie ein elektrisch leitfähiges Pulver oder Granulat verwendet werden.

Die erwähnten elektrisch leitfähigen Fäden bestehen vorzugsweise aus einem Trägerfaden aus einem elektrisch nicht leitfähigen Material, welcher eine äußere Beschichtung bzw. Ummantelung aus einem elektrisch leitenden Material aufweist. Die Trägerfäden können beispielsweise aus Rayon, Polyester, Polyamid oder Aramid bestehen und ein Monofilament, ein Garn oder ein aus mehreren Garnen bestehender Kord sein. Die elektrisch leitfähige Beschichtung der Fäden kann aus Ruß, Graphitpulver oder Kohlenstoffnanoröhren oder aus einem elastomerhaltigen Material bestehen, welches beispielsweise auf einer Latex oder ein anderes Elastomer enthaltenden Suspension basiert, in welcher elektrisch leitfähige Partikel, etwa Rußpartikel, Graphitpulver oder Kohlenstoffnanoröhren, enthalten sind, die die elektrische Leitfähigkeit der Beschichtung gewährleisten. Zur Herstellung der Beschichtung kann beispielsweise ein Rußpartikel enthaltender herkömmlicher Haftvermittler verwendet werden, der so weit flüssig ist, dass der Trägerfaden durch einen Dip-Vorgang beschichtet werden kann. Verwendet werden kann beispielsweise ein RFL-Dip (Resorzin-Formaldehyd-Latex-Dip), in welchem Rußpartikel, insbesondere N339-Partikel oder N121-Partikel, eingemischt sind. Der Anteil an elektrisch leitfähigen Partikeln in der Suspension beträgt 10 Gew.-% bis 70 Gew.-% und besonders bevorzugt 30 Gew.-% bis 50 Gew.-%. Die elektrisch leitende Beschichtung der Trägerfäden kann auch ausschließlich aus elektrisch leitenden Partikeln, beispielsweise Rußpartikel, Garphitpulver oder Kohlenstoffnanoröhren, bestehen.

Die elektrisch leitfähigen Pasten, Sprühlösungen oder Suspensionen bestehen insbesondere aus einem flüssigen Medium und darin fein verteiltem elektrisch leitfähigen Material. Das flüssige Medium kann vor allem eine üblicherweise in Laufstreifenmischungen verwendet Flüssigkeit sein, wie beispielsweise Rapsöl, MES-Öl, TDAE-Öl, RAE-Öl, paraffinisches Öl oder dergleichen. Es können ferner weitere flüssige oder niedrigschmelzende mit Kautschuk chemisch verträgliche Dispersionsmedien verwendet werden, beispielsweise hochsiedende n-Alkane und iso-Alkane oder Alkene. Auch Weichmacherester mit entsprechenden Schmelz- und Siedepunkten können verwendet werden. Es kann daher das flüssige Dispersionsmedium vom Laufstreifenmaterial nach Applikation der Dispersion absorbiert werden, die an der Oberfläche jeweils verbleibende elektrisch leitfähige Materialschicht bildet die oben erwähnten lokalen elektrisch leitfähigen Passagen. Als fein verteiltes elektrisch leitfähiges Material können beispielsweise eine Kautschukmischung oder Partikel, insbesondere Ruß, beispielsweise Ruß N 339 oder N 121, Graphitpartikel, Kohlenstoffnanoröhren, Carbonfasern oder sonstige elektrisch leitfähige Partikel, beispielsweise auch entsprechende Nanopartikel, eingesetzt werden. Der Anteil an elektrisch leitfähigen Partikeln in der Suspension beträgt beispielsweise 10 Gew.-% bis 70 Gew.-%, insbesondere 30 Gew.-% bis 50 Gew.-%.

### Bezugsziffernliste

- 1: Seitenwand
- 2: Innenschicht
- 3: Hornprofil
- 4: Karkasseinlage
- 4a: Karkasshochschlag
- 5: Wulstkern
- 6: Apex
- 7: Felge
- 7a: Felgenhorn
- 7b: Wulstsitzfläche
- 7c: Felgenabschnitt
- 8, 8': Gummistreifen
- 8a, 8'a: Abschnitt

## Patentansprüche

1. Fahrzeugluftreifen in Radialbauart mit einer Innenschicht (2), Seitenwänden (1), Wulstkernen (5), einer um die Wulstkerne (5) umgeschlagenen mit der Laufstreifenaußenfläche in elektrisch leitfähiger Verbindung stehenden zumindest abschnittsweise elektrisch leitfähigen Karkasseinlage (4) und elektrisch nicht leitfähigen Homprofilen (3), wobei in zumindest einem Wulstbereich ein mit dem Hornprofil (3) in Kontakt stehendes elektrisch leitfähiges Material (8, 8') die Karkasseinlage (4) mit der Felge (7) elektrisch leitend verbindet,
**dadurch gekennzeichnet,**
**dass** das elektrisch leitfähige Material (8, 8') an der Außenseite des Hornprofiles (3) verläuft und reifeninnenseitig und/oder reifenaußenseitig zumindest einen, Abschnitt (8a, 8'a) aufweist, welcher in radialer Richtung über das Hornprofil (3) hinausverläuft und die Karkasseinlage (4) kontaktiert.

2. Fahrzeugluftreifen nach Anspruch 1, **dadurch gekennzeichnet, dass** der Abschnitt (8a) des elektrisch leitfähigen Materials (8) die Karkasseinlage (4) reifeninnenseitig kontaktiert.

3. Fahrzeugluftreifen nach Anspruch 2, **dadurch gekennzeichnet, dass** der Abschnitt (8a) des elektrisch leitfähigen Materials (8) in radialer Richtung in einer Höhe (h₁) von 10,0 mm bis 50,0 mm, insbesondere von 15,0 mm bis 30,0 mm, endet, wobei die Höhe (h₁) ausgehend von einer in axialer Richtung verlaufenden Linie ermittelt wird, welche die Felge dort schneidet, wo sich das innere Ende des Felgenradius befindet.

4. Fahrzeugluftreifen nach Anspruch 1, **dadurch gekennzeichnet, dass** der Abschnitt (8'a) des elektrisch leitfähigen Materials (8') die Karkasseinlage (4) reifenaußenseitig kontaktiert.

5. Fahrzeugluftreifen nach Anspruch 4, **dadurch gekennzeichnet, dass** der Abschnitt (8'a) des elektrisch leitfähigen Materials (8') in radialer Richtung in einer Höhe (h₂) von 30,0 mm bis 90,0 mm, insbesondere von bis zu 70,0 mm, endet, wobei die Höhe (h₂) ausgehend von einer in axialer Richtung verlaufenden Linie ermittelt wird, welche die Felge dort schneidet, wo sich das innere Ende des Felgenradius befindet.

6. Fahrzeugluftreifen nach einem der Ansprüche 1 bis 5, **dadurch gekennzeichnet, dass** das elektrisch leitfähige Material ein Gummistreifen (8, 8') ist.

7. Fahrzeugluftreifen nach Anspruch 6, **dadurch gekennzeichnet, dass** der Gummistreifen (8, 8') eine Dicke von 0,5 mm bis 1,0 mm aufweist.

8. Fahrzeugluftreifen nach Anspruch 6 oder 7, **dadurch gekennzeichnet, dass** der Gummistreifen (8, 8') in Umfangsrichtung eine Breite (b₁) von 2,0 mm bis 80,0 mm, insbesondere von 5,0 mm bis 50,0 mm, aufweist.

9. Fahrzeugluftreifen nach Anspruch 6 oder 7, **dadurch gekennzeichnet, dass** der Gummistreifen (8, 8') in Umfangsrichtung des Reifens umläuft.

10. Fahrzeugluftreifen nach einem der Ansprüche 1 bis 5, **dadurch gekennzeichnet, dass** das elektrisch leitfähige Material zumindest ein elektrisch leitfähiger Faden oder ein elektrisch leitfähiges Gewebe ist.

11. Fahrzeugluftreifen nach einem der Ansprüche 1 bis 5, **dadurch gekennzeichnet, dass** das elektrisch leitfähige Material eine aufgesprühte oder aufgestrichene elektrisch leitfähig Paste ist.

12. Fahrzeugluftreifen nach einem der Ansprüche 1 bis 5, **dadurch gekennzeichnet, dass** das elektrisch leitfähige Material eine aufgesprühte elektrisch leitfähige Sprühlösung ist.

13. Fahrzeugluftreifen nach einem der Ansprüche 1 bis 5, **dadurch gekennzeichnet, dass** das elektrisch leitfähige Material eine aufgesprühte oder aufgestrichene elektrisch leitfähige Suspension ist.

14. Fahrzeugluftreifen nach einem der Ansprüche 1 bis 5, **dadurch gekennzeichnet, dass** das elektrisch leitfähige Material ein elektrisch leitfähiges Pulver ist.

15. Fahrzeugluftreifen nach einem der Ansprüche 1 bis 5, **dadurch gekennzeichnet, dass** das elektrisch leitfähige Material ein elektrisch leitfähiges Granulat ist.

## Claims

1. Vehicle radial pneumatic tyre having an inner ply (2), side walls (1), bead cores (5), an at least partly electrically conductive carcass inlay (4) wrapped around the bead cores (5) and electrically conductively connected to the tread outer surface, and electrically nonconductive horn profiles (3), wherein, in at least one bead area, an electrically conductive material (8, 8') that is in contact with the horn profile (3) connects the carcass inlay (4) electrically conductively to the rim (7),
**characterized in that**
the electrically conductive material (8, 8') runs on the outer side of the horn profile (3) and, on the tyre inner side and/or tyre outer side, has at least one section (8a, 8'a) which runs out over the horn profile (3) in the radial direction and makes contact with the carcass inlay (4).

2. Vehicle pneumatic tyre according to Claim 1, **characterized in that** the section (8a) of the electrically conductive material (8) makes contact with the carcass inlay (4) on the tyre inner side.

3. Vehicle pneumatic tyre according to Claim 2, **characterized in that** the section (8a) of the electrically conductive material (8) ends in the radial direction at a height (h1) of 10.0 mm to 50.0 mm, in particular of 15.0 mm to 30.0 mm, wherein the height (h₁) is determined from a line running in the axial direction which intersects the rim where the inner end of the rim radius is located.

4. Vehicle pneumatic tyre according to Claim 1, **characterized in that** the section (8'a) of the electrically conductive material (8') makes contact with the carcass inlay (4) on the tyre outer side.

5. Vehicle pneumatic tyre according to Claim 4, **characterized in that** the section (8'a) of the electrically conductive material (8') ends in the radial direction at a height (h₂) of 30.0 mm to 90.0 mm, in particular of up to 70.0 mm, wherein the height (h₂) is determined from a line running in the axial direction which intersects the rim where the inner end of the rim radius is located.

6. Vehicle pneumatic tyre according to one of Claims 1 to 5, **characterized in that** the electrically conductive material is a rubber strip (8, 8').

7. Vehicle pneumatic tyre according to Claim 6, **characterized in that** the rubber strip (8, 8') has a thickness of 0.5 mm to 1.0 mm.

8. Vehicle pneumatic tyre according to Claim 6 or 7, **characterized in that** the rubber strip (8, 8') has a width (b₁) in the circumferential direction of 2.0 mm to 80.0 mm, in particular of 5.0 mm to 50.0 mm.

9. Vehicle pneumatic tyre according to Claim 6 or 7, **characterized in that** the rubber strip (8, 8') runs around in the circumferential direction of the tyre.

10. Vehicle pneumatic tyre according to one of Claims 1 to 5, **characterized in that** the electrically conductive material is at least one electrically conductive thread or one electrically conductive fabric.

11. Vehicle pneumatic tyre according to one of Claims 1 to 5, **characterized in that** the electrically conductive material is an electrically conductive paste sprayed on or spread on.

12. Vehicle pneumatic tyre according to one of Claims 1 to 5, **characterized in that** the electrically conductive material is an electrically conductive spray solution sprayed on.

13. Vehicle pneumatic tyre according to one of Claims 1 to 5, **characterized in that** the electrically conductive material is an electrically conductive suspension sprayed on or spread on.

14. Vehicle pneumatic tyre according to one of Claims 1 to .5, **characterized in that** the electrically conductive material is an electrically conductive powder.

15. Vehicle pneumatic tyre according to one of Claims 1 to 5, **characterized in that** the electrically conductive material is electrically conductive granules.

## Revendications

1. Pneumatique de véhicule de type radial comprenant une couche intérieure (2), des parois latérales (1), des tringles de talon (5), une couche intérieure formant carcasse (4) électriquement conductrice par endroits qui enveloppe les tringles de talon (5) et qui est reliée électriquement à la surface extérieure de la bande de roulement et des profils formant corne (3) électriquement non conducteurs, un matériau électriquement conducteur (8, 8') en contact avec le profil formant corne (3) reliant de manière électriquement conductrice, dans au moins une région de talon, la couche intérieure formant carcasse (4) à la jante (7),
**caractérisé en ce que** le matériau électriquement conducteur (8, 8') s'étend du côté extérieur du profil formant corne (3) et comporte, du côté intérieur et/ou du côté extérieur du pneumatique, au moins une portion (8a, 8'a) qui s'étend dans une direction radiale au-delà du profil formant corne (3) et qui vient en contact avec la couche intérieure formant carcasse (4).

2. Pneumatique de véhicule selon la revendication 1, **caractérisé en ce que** la portion (8a) du matériau électriquement conducteur (8) vient en contact avec la couche intérieure formant carcasse (4) du côté intérieur du pneumatique.

3. Pneumatique de véhicule selon la revendication 2, **caractérisé en ce que** la portion (8a) du matériau électriquement conducteur (8) se termine dans une direction radiale à une hauteur (h₁) de 10,0 mm à 50,0 mm, notamment de 15,0 mm à 30,0 mm, la hauteur (h₁) étant déterminée à partir d'une ligne qui s'étend dans la direction axiale et qui coupe la jante à l'endroit où se trouve l'extrémité intérieure du rayon de la jante.

4. Pneumatique de véhicule selon la revendication 1, **caractérisé en ce que** la portion (8'a) du matériau électriquement conducteur (8') vient en contact avec la couche intérieure formant carcasse (4) du côté extérieur du pneumatique.

5. Pneumatique de véhicule selon la revendication 4, **caractérisé en ce que** la portion (8'a) du matériau électriquement conducteur (8') se termine dans une direction radiale à une hauteur (h₂) de 30,0 mm à 90,0 mm, notamment jusqu'à 70,0 mm, la hauteur (h₂) étant déterminée à partir d'une ligne qui s'étend dans la direction axiale et qui coupe la jante à l'endroit où se trouve l'extrémité intérieure du rayon de la jante.

6. Pneumatique de véhicule selon l'une des revendications 1 à 5, **caractérisé en ce que** le matériau électriquement conducteur est une bande de caoutchouc (8, 8').

7. Pneumatique de véhicule selon la revendication 6, **caractérisé en ce que** la bande de caoutchouc (8, 8') a une épaisseur de 0,5 mm à 1,0 mm.

8. Pneumatique de véhicule selon la revendication 6 ou 7, **caractérisé en ce que** la bande de caoutchouc (8, 8') a dans la direction circonférentielle une largeur (b₁) de 2,0 mm à 80,0 mm, notamment de 5,0 mm à 50,0 mm.

9. Pneumatique de véhicule selon la revendication 6 ou 7, **caractérisé en ce que** la bande de caoutchouc (8, 8') s'étend dans la circonférentielle du pneumatique.

10. Pneumatique de véhicule selon l'une des revendications 1 à 5, **caractérisé en ce que** le matériau électriquement conducteur est au moins un fil électriquement conducteur ou un tissu électriquement conducteur.

11. Pneumatique de véhicule selon l'une des revendications 1 à 5, **caractérisé en ce que** le matériau électriquement conducteur est une pâte électriquement conductrice pulvérisée ou appliquée.

12. Pneumatique de véhicule selon l'une des revendications 1 à 5, **caractérisé en ce que** le matériau électriquement conducteur est une solution de pulvérisation électriquement conductrice pulvérisée.

13. Pneumatique de véhicule selon l'une des revendications 1 à 5, **caractérisé en ce que** le matériau électriquement conducteur est une suspension électriquement conductrice pulvérisée ou appliquée.

14. Pneumatique de véhicule selon l'une des revendications 1 à 5, **caractérisé en ce que** le matériau électriquement conducteur est une poudre électriquement conductrice.

15. Pneumatique de véhicule selon l'une des revendications 1 à 5, **caractérisé en ce que** le matériau électriquement conducteur est un granulé électriquement conducteur.
